# EUROPEAN PATENT APPLICATION

(11) **EP 3 839 010 A1**
(43) Date of publication of application: **23.06.2021**
(21) Application number: 19217469.6
(22) Date of filing: 18.12.2019
(51) Int. Cl.: C10B 47/44, C10B 53/07

(54) **REACTOR FOR PYROLYSIS OF POLYMERIC WASTE MATERIAL AND SYSTEM COMPRISING THE SAME**

(71) Applicant: The Fuel Holding B.V., 5428 NT Venhorst (NL)
(72) Inventor: van Deurzen, Adrianus Lambertus Christoffel, 5428 NT Venhorst (NL)
(74) Representative: Renkema, Jaap

(57) **Abstract**

The invention relates to a horizontal pyrolysis reactor (20) comprising an elongated cylindrical tube (21) having a longitudinal axis (22), said tube having a first end portion (23) provided with an inlet port (24) and a second end portion (25) provided with an outlet port (26). Said tube being configured to, in operation, pyrolyze a polymeric waste material that is fed into said tube via the inlet port into gas and char residue. Said gas can be discharged from the tube via a gas venting port (27). A conveying device (28) is arranged inside said tube to convey the polymeric waste material and the char residue through said tube from the inlet port to the outlet port. The conveying device has a longitudinal axis (29) that preferably extends parallel to and below the longitudinal axis of said tube.

The invention further relates to a system (100) comprising the reactor of the invention and a process for pyrolyzing a polymeric waste material using said reactor.

## Description

### FIELD OF THE INVENTION

The present invention relates to a reactor for the pyrolysis of polymeric waste material, in particular to a reactor for converting polymeric waste material into a hydro carbonaceous fluid. The present invention is further related to a system comprising said reactor. Additionally, the present invention relates to a process for performing said pyrolysis of polymeric waste material.

### BACKGROUND OF THE INVENTION

One way of recycling of polymeric waste materials is to clean collected polymeric waste, separating and sorting the waste into different type of materials such as polyethylene, polypropylene, polyamides and the likes. Usually, these separated materials are then molten and shaped into pellets which may be used to manufacture new polymeric materials. Such processes, however, are complicated and labour intensive due to for instance different colours of the waste materials and waste materials being composites of multiple types of materials that are not easy to separate. Moreover, the resulting pellets often are of lower quality than fresh, virgin, polymeric materials in view of purity and mechanical properties.

Another way of recycling of polymeric waste materials is to convert the polymeric waste materials into a fluid such as a hydro carbonaceous oil or gas that can be used for instance as a fuel. Such conversion can be done in a batch reactor or in a continues reactor. In WO 2013/119141 A1 such a continues reactor is disclosed wherein hydro carbonaceous materials are pyrolyzed. In order to allow hydro carbonaceous vapours formed during the pyrolysis, the reactor in WO 2013/119141 A1 is positioned under an angle to create head space for vapours to escape. This however requires a more complex and costly design of the reactor.

### SUMMARY OF THE INVENTION

It is an object of the present invention to provide a reactor for pyrolyzing polymeric waste material in which above-mentioned and/or other problems are solved.

The present invention provides a horizontal pyrolysis reactor comprising
- an elongated cylindrical tube having a longitudinal axis, wherein the tube has a first end portion having an inlet port and a second end portion having an outlet port and the tube is configured to, in operation, pyrolyze a polymeric waste material into gas and char residue;
- at least one gas venting port that is provided to the elongated cylindrical tube and configured to, in operation, discharge the gas from the elongated cylindrical tube; and
- a conveying device arranged in the tube and configured to, in operation, convey the polymeric waste material and the char residue through the elongated cylindrical tube from the inlet port to the outlet port, wherein the conveying device has a longitudinal axis that is arranged below the longitudinal axis of the elongated cylindrical tube.

According to the invention, the longitudinal axis of the conveying device is arranged below the longitudinal axis of the elongated cylindrical tube. This eccentric arrangement of the conveying device inside the elongated cylindrical tube means that a first distance between the conveying device and an inner surface of a first part of the elongated cylindrical tube being a top part of the elongated cylindrical tube is larger than a second distance between the conveying device and an inner surface of a second part of the elongated cylindrical tube being a bottom part of the elongated cylindrical tube. Furthermore, preferably the longitudinal axis of the conveying device is arranged parallel to and below the longitudinal axis of the elongated cylindrical tube.

Herein, the terms such as 'top', 'bottom', 'upper', 'lower' are used as seen during the operation of the horizontal reactor, i.e. when the longitudinal axis of the elongated cylindrical tube is parallel to the ground.

Accordingly, the term 'top part of the elongated cylindrical tube' means the part of said tube which comes to the top when the horizontal reactor is in operation. Similarly, the term bottom part of the elongated cylindrical tube' means the part of said tube which comes to the bottom when the horizontal reactor is in operation.

The distance between the conveying device and the top part of the elongated cylindrical tube is defined as the distance between a tube defined to circumscribe the conveying device and the inner surface of the top part of the elongated cylindrical tube. Similarly, the distance between the conveying device and the bottom part of the elongated cylindrical tube is defined as the distance between a tube defined to circumscribe the conveying device and the inner surface of the bottom part of the elongated cylindrical tube.

During operation, the polymeric waste material is decomposed into gas and char residue while being transported from the inlet port to the outlet port of the elongated cylindrical tube of the reactor according to the invention. The produced gas is collected via at least one gas venting port. A mixture of the polymeric waste material and the produced char residue is transported towards the outlet port of the elongated cylindrical tube of the reactor. It was observed that the char residue gradually accumulates at the inner surface of the bottom part of the elongated cylindrical tube during operation if no measures are taken. This accumulation of char residue may block the transportation of the material in the tube. This may also result in a layer of the char residue which acts as a heat isolating layer that is arranged between the polymeric waste material in the elongated cylindrical tube and the inner surface of the bottom part of the elongated cylindrical tube. In this way, the layer of char residue can decrease the transport of heat from the inner wall to the polymeric waste material in the elongated cylindrical tube. This causes the pyrolysis process to become less efficient. Eventually, the pyrolysis process can even stop.

According to the invention, the longitudinal axis of the conveying device, which preferably is a screw of any suitable construction, extends at least below and preferably parallel to and below the longitudinal axis of the elongated cylindrical tube, i.e. the conveying device is eccentrically arranged. This results in the conveying device coming close to or in contact with the inner surface of the bottom part of the elongated cylindrical tube while a relatively large space is provided in the upper part of the elongated cylindrical tube. Due to the small or no distance between the conveying device and the inner surface of the bottom part of the tube, the screw prevents the char residue from accumulating at the inner surface of the bottom part of the elongated cylindrical tube, preventing the blockage of the operation and the formation of a heat insulating layer as mentioned above. An energy efficient reactor is thus provided according to the invention. The produced gas stays in the space at the upper part of the elongated cylindrical tube of the reactor (provided due to the relatively large distance between the conveying device and the inner surface of the top part of the tube) until it is discharged through the at least one gas venting port.

### Reactor

Preferably, the elongated cylindrical tube has an inner diameter of 10 cm to 50 cm preferably 20 cm to 40 cm, more preferably 25 cm to 35 cm. Preferably, the elongated cylindrical tube has a length of 5 m to 35 m, preferably 10 m to 25 m, more preferably 15 m to 20 m. Such dimensions of the tube reduce the risk of the material being blocked in the tube.

The conveying device has a smaller diameter than an inner diameter of the elongated cylindrical tube. Typically, the conveying device has a diameter which is 70% to 99% of the inner diameter of the elongated cylindrical tube. The length of the conveying device is selected to efficiently transport the polymeric waste material from the inlet port to the outlet port of the elongated cylindrical tube, and may typically be 90% to 100% of the elongated cylindrical tube.

Preferably, a first distance between the conveying device and an inner surface of a first part of the elongated cylindrical tube that is a top part of said tube is 5.0 cm to 10.0 cm.

Preferably, a second distance between the conveying device and an inner surface of a second part of the elongated cylindrical tube that is a bottom part of said tube is at most 5.0 cm. This allows the char residue to be efficiently removed, i.e. in such a way to ensure that the pyrolysis process does not become too inefficient and eventually might stop, from the inner surface of the bottom part of the elongated cylindrical tube while avoiding any damage to the inner surface of the bottom part of said tube and the conveying device.

In some embodiments, the second distance between the conveying device and the inner surface of the bottom part of said tube is 0.1 cm to 5.0 cm. The space between the conveying device and the inner surface of the bottom part of the elongated cylindrical tube is chosen such that any char residue that accumulates between the conveying device and the inner surface of the bottom part of the elongated cylindrical tube does not render the pyrolysis process to become too inefficient and to eventually make it stop. In addition, any damage to the inner surface of the bottom part of said tube and the conveying device can be reduced and ideally can be prevented.

In some embodiments, the conveying device and the inner surface of the bottom part of the elongated cylindrical tube are in contact with each other. This ensures that the char residue is scraped from the inner surface of the bottom part of said tube. In this way, heat transfer from the elongated cylindrical tube to the polymeric waste material is hampered as little as possible and ideally remains unaffected. As a result, the pyrolysis process can be prevented from becoming less efficient and from stopping eventually.

Preferably, the conveying device is a screw. The screw can be of any suitable type, such as for example a paddle screw, a ribbon screw or an extrusion screw.

Preferably, the reactor is configured to be heated by heating the elongated cylindrical tube during operation. The reactor preferably does not have a dedicated heating arrangement for the conveying device, avoiding the reactor to have a complex structure. However, providing a dedicated heating arrangement for heating the conveying device is of course possible at the expense of added complexity.

Preferably, the reactor further comprises an outer elongated cylindrical tube concentrically arranged with and enclosing the elongated cylindrical tube to provide a double walled tube, wherein the elongated cylindrical tube is configured to be heated using a heated gas in a space confined by the elongated cylindrical tube and the outer elongated cylindrical tube. This is advantageous in that an energy efficient heating can be achieved, compared e.g. to electrical heating.

In some embodiments in which the conveying device is a screw, the screw has a constant screw lead along the longitudinal axis of the screw.

In some embodiments, the screw has a differing screw lead along the longitudinal axis of the screw. Preferably, the lead of the screw is smaller in a portion of the screw close to the outlet port of the elongated cylindrical tube than in a portion of the screw close to the inlet port of the elongated cylindrical tube. Accordingly, in some embodiments, the screw has a first portion having a first lead and a second portion having a second lead, wherein the second portion of the screw is closer to the outlet port of the elongated cylindrical tube than to the inlet port of the elongated cylindrical tube, wherein the second lead is smaller than the first lead.

Generally, the at least one gas venting port may be provided in the upper part, e.g. the top part, of the elongated cylindrical tube to provide an opening for the gas collected in the space in the tube between the conveying device and the inner surface of the top part of the elongated cylindrical tube. The location at which the at least one gas venting port is provided, and the number of gas venting ports may be suitably selected in accordance with a specific situation. The number of gas venting ports may e.g. be 1 to 10, e.g. 1, 2, 3, 4 or 5. For example, two or more gas venting ports may be provided at the top part of the elongated cylindrical tube distributed along the longitudinal axis of the tube.

### System

The invention further provides a system comprising:
- the reactor according to the invention;
- a feeding portion fluidly connected to the inlet port of the elongated cylindrical tube of the reactor for feeding the polymeric waste material into the reactor;
- a gas collection portion fluidly connected to the at least one gas venting port of the elongated cylindrical tube of the reactor for collecting the gas from the reactor and
- a char collection portion fluidly connected to the outlet port of the elongated cylindrical tube of the reactor for collecting the char residue from the reactor.

Preferably, the feeding portion comprises a second elongated cylindrical tube that is configured to receive polymeric waste material and, in operation, at least partially melt polymeric waste material, and a second conveying device that is arranged inside the second elongated cylindrical tube and is adapted to convey the at least partially molten polymeric waste material through the second elongated cylindrical tube and into the inlet port of the elongated cylindrical tube of the reactor. Feeding an at least partially molten polymeric waste material into the reactor allows an efficient pyrolysis in the reactor.

In embodiments in which the conveying device of the reactor and the second conveying device of the feeding portion are screws, preferably, the second screw of the feeding portion has a lead which is equal to or larger than the lead of the screw of the reactor according to the invention. When the second screw of the feeding portion and/or the screw of the reactor according to the invention has a differing screw lead along its longitudinal axis, the smallest lead in the second screw of the feeding portion and the largest lead in the screw of the reactor according to the invention are comparable or the same.

Preferably, the feeding portion further comprises a filling mechanism for filling the feeding portion wherein the filling mechanism comprises two or more valves and wherein, in operation, at least the valves of the filing mechanism are cooled. The valves are operable to prevent oxygen from entering the feeding portion and ultimately the inlet port of the elongated cylindrical tube of the reactor while the polymeric waste material is fed into the feeding portion. The cooling of at least the valves of the filling mechanism prevents the polymeric waste material to be molten inside the filling mechanism and sticking to at least the valves of the filling mechanism.

Preferably, the gas collection portion comprises a gas cooling and/or fractionation unit configured to, in operation, obtain a hydro carbonaceous liquid.

Preferably, the char collection portion comprises a third elongated cylindrical tube that is configured to, in operation, receive char residue via the outlet port of the elongated cylindrical tube of the reactor, and a third conveying device that is arranged inside the third elongated cylindrical tube and is adapted to transport the char residue through the third elongated cylindrical tube optionally while pyrolyzing the char residue.

Preferably, the conveying device of the reactor and the third conveying device of the char collection portion are screws, wherein the screw of the char collection portion has a lead which is equal to or smaller than the lead of the screw of the reactor according to the invention. When the screw of the char collection portion and/or the screw of the reactor according to the invention has a differing screw lead along its longitudinal axis, the largest lead of the screw of the char collection portion and the smallest lead of the screw of the reactor according to the invention being comparable or the same.

The system according to the invention is easy to construct and easy to replace due to the modularity of the system.

### Process

The invention further provides a process for pyrolyzing a polymeric waste material, wherein the process comprises the steps of:
- feeding the polymeric waste material into the inlet port of the elongated cylindrical tube of the reactor according to the invention;
- conveying the polymeric waste material through the elongated cylindrical tube of the reactor, wherein the elongated cylindrical tube of the reactor is heated to pyrolyze the polymeric waste material into gas and char residue;
- collecting the gas via the at least one gas venting port of the elongated cylindrical tube of the reactor; and
- collecting the char residue from the outlet port of the elongated cylindrical tube of the reactor.

The reactor according to the invention is positioned substantially parallel to the ground during operation, i.e. the angle between the longitudinal axis of the elongated cylindrical tube of the reactor and the ground is 0° to 2°.

Preferably, the process according to the invention is a continuous process, i.e. the feeding of the polymeric waste material and the collection of the gas and the char residue are performed continuously.

Preferably, the polymeric waste material fed into the elongated cylindrical tube of the reactor is at least partially molten.

Preferably, the polymeric waste material fed into the elongated cylindrical tube of the reactor has a temperature of 350°C to 450°C.

Preferably, the reactor is heated such that the inner surface of the elongated cylindrical tube has a temperature of 700°C to 1100°C, preferably 800°C to 1000°C, more preferably 850°C to 950°C. The heating temperature is preferably selected such that the temperature is not so high as to weaken the construction of the elongated cylindrical tube or other components of the reactor and/or the system.

Preferably, pressure inside the elongated cylindrical is about 1 bar during operation.

### Polymeric waste material

The polymeric waste material comprises at least one type of polymer. The at least one type of polymer is converted into a polymer gas and/or a carbon char residue.

The polymeric waste material may further comprise a non-polymeric material, such as glass or metal. Depending on the type of the non-polymeric material and the heating conditions of the reactor, the non-polymeric material is collected via at least one of the at least one gas venting port and the outlet port of the elongated cylindrical tube of the reactor.

### Gas

The gas made from the polymeric waste material by pyrolysis is collected via the at least one gas venting port of the elongated cylindrical tube of the reactor.

The gas may be processed, e.g. cooled and/or fractionated to obtain desired polymer fractions, for example light sweet crude oil, fuel additives, base oil, slack wax, paraffin wax, microcrystalline wax and condensate dominated by aromatic petroleum hydrocarbons.

Preferably, the process further comprises the step of cooling and/or fractionating the gas collected to obtain a hydro carbonaceous liquid.

The cooling and the fractionation of a polymer gas from a pyrolysis reactor is per-se well-known and described e.g. in US2009/0007484 and WO2013/119941, incorporated herein by reference. In particular, the cooling and the fractionation may be performed in the manner as described in [0095] to [0106] and FIG.1 of US2009/0007484, incorporated herein by reference.

### Char residue

The char residue made from the polymeric waste material by pyrolysis is collected via the outlet port of the elongated cylindrical tube of the reactor. Preferably, the char is fed into the char collection portion via the outlet port of the elongated cylindrical tube of the reactor.

The char residue may comprise a finely divided carbon char and/or a non-polymeric material which was present in the polymeric waste material.

The collected char residue may be further processed, e.g. further pyrolyzed in the third elongated cylindrical tube of the char collection portion to obtain further desired products or stored in a suitable storage unit.

It is noted that it is to be understood that a description on a process comprising certain steps also discloses a process consisting of these steps. The process consisting of these steps may be advantageous in that it offers a simpler, more economical process.

When values are mentioned for a lower limit and an upper limit for a parameter, ranges made by the combinations of the values of the lower limit and the values of the upper limit are also understood to be disclosed.

### BRIEF DESCRIPTION OF THE DRAWINGS

Further features and advantages of the invention will become apparent from the description of the invention by way of exemplary and non-limiting embodiments of a horizontal pyrolysis reactor and system according to the invention.

The person skilled in the art will appreciate that the described embodiments of the reactor and the system according to the invention are exemplary in nature only and not to be construed as limiting the scope of protection in any way. The person skilled in the art will realize that alternatives and equivalent embodiments of the reactor and the system according to the invention can be conceived and reduced to practice without departing from the scope of protection of the present invention.

Reference will be made to the figures on the accompanying drawing sheets. The figures are schematic in nature and therefore not necessarily drawn to scale. Furthermore, equal reference numerals denote equal or similar parts. On the attached drawing sheets,
figure 1 shows a schematic perspective view of an exemplary, non-limiting embodiment of a system according to the invention;
figure 2 shows a schematic cross-sectional view of an exemplary, non-limiting first embodiment of the elongated cylindrical tube of the reactor according to the invention;
figure 3 shows a schematic cross-sectional view of an exemplary, non-limiting second embodiment of the elongated cylindrical tube of the reactor according to the invention; and
figure 4 schematically shows a side view of exemplary, non-limiting embodiments of conveying devices of the feeding portion, the reactor, and the char collection portion in accordance with the exemplary, non-limiting embodiment of the system shown in figure 1.

### DETAILED DESCRIPTION OF EMBODIMENTS

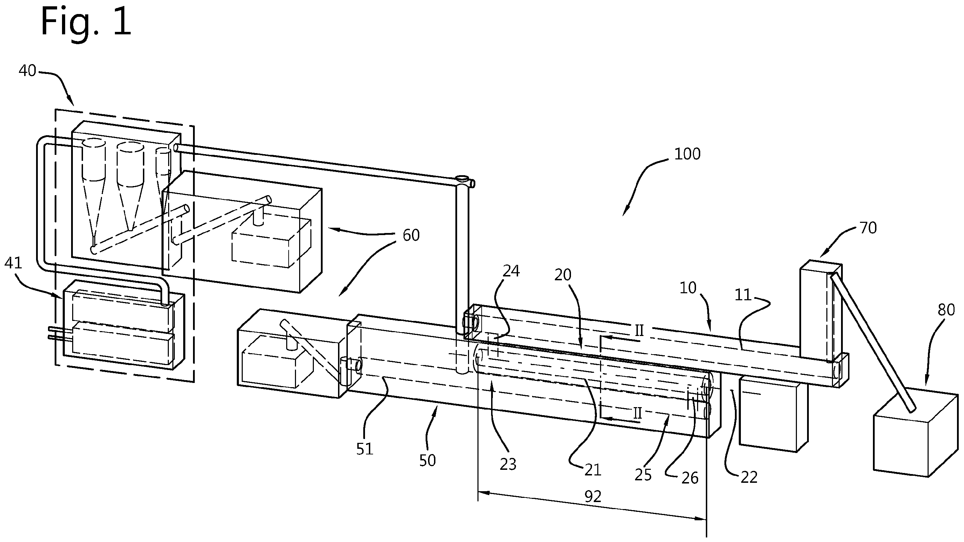

Figure 1 shows a schematic perspective view of an exemplary, non-limiting embodiment of a system 100 according to the invention. The system 100 comprises a horizontal pyrolysis reactor 20 according to the invention. Said reactor 20 comprises an elongated cylindrical tube 21 having a longitudinal axis 22. The elongated cylindrical tube 21 of the reactor 20 according to the invention is positioned substantially parallel to the ground during operation, i.e. the angle between the longitudinal axis 22 of the elongated cylindrical tube 21 of the reactor 20 and the ground is 0° to 2°. From figure 1 it can be observed that the elongated cylindrical tube 21 has a first end portion 23 that is provided with an inlet port 24 and a second end portion 25 that is provided with an outlet port 26. The elongated cylindrical tube 21 is configured to, when the system 100 is in operation, pyrolyze a polymeric waste material into gas and char residue.

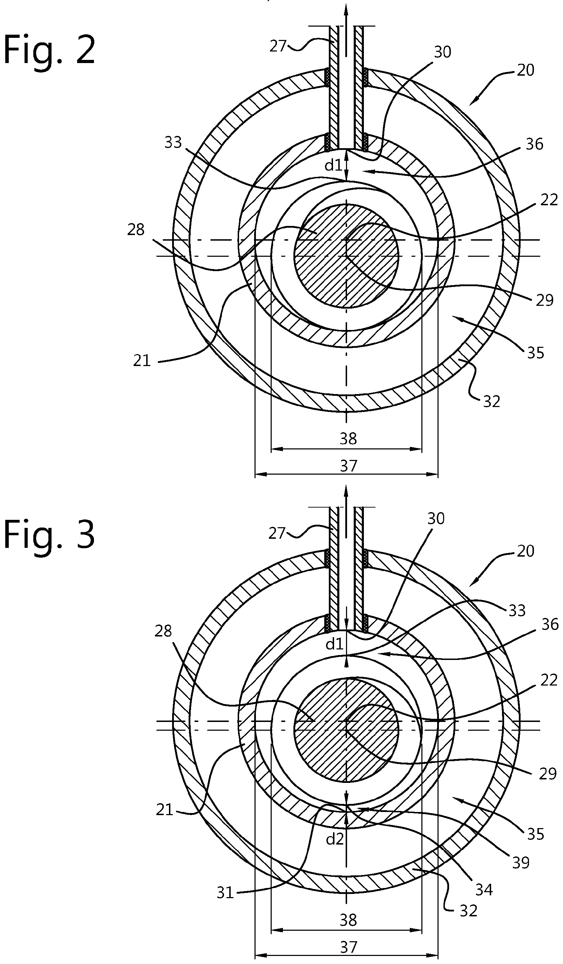

The reactor 20 further comprises at least one gas venting port 27 and a conveying device 28 (both shown in figures 2 and 3). The at least one gas venting port 27 is provided to the elongated cylindrical tube 21 and configured to, when the system 100 is in operation, discharge the gas from the elongated cylindrical tube 21. The conveying device 28 is arranged in the elongated cylindrical tube 21 and configured to, when the system 100 is in operation, convey the polymeric waste material and the char residue through the elongated cylindrical tube 21 from the inlet port 24 to the outlet port 26. The conveying device 28 has a longitudinal axis 29 that is arranged below the longitudinal axis 22 of the elongated cylindrical tube 21.

In accordance with the exemplary embodiment of the system 100 shown in figure 1, the inlet port 24 of the elongated cylindrical tube 21 of the reactor 20 is fluidly connected to a feeding portion 10 that is adapted to feed polymeric waste material into the elongated cylindrical tube 21 of the reactor 20. As shown in figure 1, the feeding portion 10 of the system 100 is provided with a filling mechanism 70 that is fluidly connected to a supply unit 80 for filling the feeding portion 10 with shredded polymeric waste material of any kind that is contained in the supply unit 80. The shredded polymeric waste material comprises at least one type of polymer. The at least one type of polymer is converted in the elongated cylindrical tube 21 of the reactor 20 into a polymer gas and/or a carbon char residue. The polymeric waste material may further comprise a non-polymeric material, such as glass or metal. Depending on the type of the non-polymeric material and the heating conditions of the reactor 20, the non-polymeric material is collected via said at least one gas venting port 27 (shown in figures 2 and 3) and the outlet port 26 of the elongated cylindrical tube 21 of the reactor 20.

The filling mechanism 70 comprises two or more valves (not shown). When the system 100 is in operation, at least the valves of the filing mechanism 70 are cooled. Cooling can for example be done using water. However, the person skilled in the art will appreciate that any suitable kind of cooling can be applied. The valves are operable to prevent oxygen from entering the feeding portion 10 and ultimately the inlet port 24 of the elongated cylindrical tube 21 of the reactor 20 while the polymeric waste material is fed into the feeding portion 10. The cooling of at least the valves of the filling mechanism 70 prevents the polymeric waste material to be molten inside the filling mechanism 70 and sticking to at least the valves of the filling mechanism 70.

In accordance with the exemplary embodiment of the system 100 shown in figure 1, the feeding portion 10 comprises a second elongated cylindrical tube 11 that is configured to receive polymeric waste material from the filling mechanism 70. When the system 100 is in operation, the polymeric waste material can at least partially melt in the second elongated cylindrical tube 11 in which the temperature can be between ambient and 350°C to 450°C. The person skilled in the art will appreciate that congestion of the second elongated cylindrical tube 11 due to sticking of the polymeric waste material should be prevented.

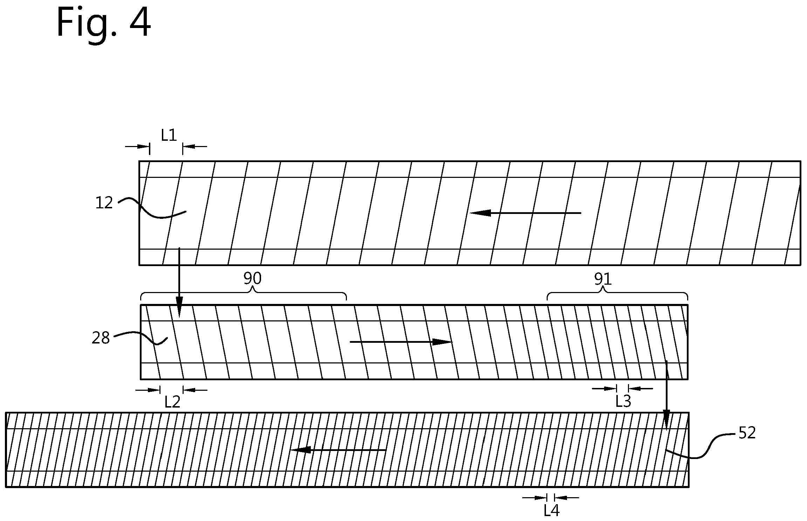

The second elongated cylindrical tube 11 is provided with a second conveying device 12 (schematically shown in figure 4) that is arranged inside the second elongated cylindrical tube 11 and is adapted to convey the at least partially molten polymeric waste material through the second elongated cylindrical tube 11 and into the inlet port 24 of the elongated cylindrical tube 21 of the reactor 20. Feeding an at least partially molten polymeric waste material into the elongated cylindrical tube 21 allows an efficient pyrolysis in the reactor 20.

In accordance with the exemplary embodiment of the system 100 shown in figure 1, a gas collection portion 40 is fluidly connected to a gas venting port 27 (shown in figures 2 and 3) of the elongated cylindrical tube 21 of the reactor 20 for collecting gas that is obtained by pyrolysis of the polymeric waste material from the reactor 20. The gas collection portion 40 preferably comprises a gas cooling and/or fractionation unit 41 that is configured to, when the system 100 is in operation, obtain a hydro carbonaceous liquid comprising desired polymer fractions, for example light sweet crude oil, fuel additives, base oil, slack wax, paraffin wax, microcrystalline wax and condensate dominated by aromatic petroleum hydrocarbons. The obtained hydro carbonaceous liquid can be stored in a storage container (not shown) that is fluidly connected to the gas collection portion 40.

In accordance with the exemplary embodiment of the system 100 shown in figure 1, a char collection portion 50 is provided that comprises a third elongated cylindrical tube 51 that is fluidly connected to the outlet port 26 of the elongated cylindrical tube 21 of the reactor 20 for collecting char residue that is obtained by pyrolysis of the polymeric waste material from the reactor 20. The third elongated cylindrical tube 51 is provided with a third conveying device 52 (schematically shown in figure 4) that is arranged inside the third elongated cylindrical tube 51 and is adapted to transport the char residue through the third elongated cylindrical tube 51 optionally while pyrolyzing the char residue. In this way further desired products can be obtained.

In accordance with the exemplary embodiment of the system 100 shown in figure 1, storage units 60 are fluidly connected with the gas collection portion 40 and the char collection portion 50 for storing the char residue. The char residue may comprise a finely divided carbon char, such as ash, and/or a non-polymeric material which was present in the polymeric waste material.

Figure 2 shows a schematic cross-sectional view of an exemplary, non-limiting first embodiment of the elongated cylindrical tube 21 of the reactor 20 according to the invention. In accordance with this embodiment, the reactor 20 comprises an outer elongated cylindrical tube 32 that is concentrically arranged with the elongated cylindrical tube 21 and encloses the elongated cylindrical tube 21. In this way, the reactor 20 is provided with a double walled processing chamber comprising the elongated cylindrical tube 21 and the outer elongated cylindrical tube 32. During operation of the system 100, a heated gas can be passed through a space 35 that is confined by the elongated cylindrical tube 21 and the outer elongated cylindrical tube 32 to heat the elongated cylindrical tube 21. This way of heating is advantageous in that an energy efficient heating can be achieved, compared to for example electrical heating.

Preferably, the reactor 20 is heated such that the inner surface of the elongated cylindrical tube 21 has a temperature of 700°C to 1100°C, preferably 800°C to 1000°C, more preferably 850°C to 950°C. The temperature of the inner surface of the elongated cylindrical tube 21 can be measured at the inner surface of the elongated cylindrical tube 21. It is also possible to measure the temperature of the outer surface of the elongated cylindrical tube 21 and use this measured temperature to determine the temperature of the inner surface of the elongated cylindrical tube 21. The heating temperature is preferably selected such that the temperature is not so high as to weaken the construction of the elongated cylindrical tube 21 or other components of the reactor 20 and/or the system 100. Preferably, the pressure inside the elongated cylindrical tube 21 during operation is about 1 bar.

The elongated cylindrical tube 21 is provided with a conveying device 28 that is configured to, when the system 100 is in operation, convey the at least partially molten polymeric waste material that is fed into the elongated cylindrical tube 21 via the inlet port 24 (shown in figure 1). While being conveyed, the at least partly molten polymeric waste material is pyrolyzed into gas and char residue. The at least partly molten polymeric waste material and the char residue are conveyed through the elongated cylindrical tube 21 from the inlet port 24 to the outlet port 26 (both shown in figure 1).

The conveying device 28 has a longitudinal axis 29 that is arranged below and parallel to the longitudinal axis 22 of the elongated cylindrical tube 21. In this way, the conveying device 28, which preferably is a screw of any suitable construction, is eccentrically arrangement inside the elongated cylindrical tube 21.

In accordance with the embodiment shown in figure 2, the eccentric arrangement of the conveying device 28 gives rise to a first distance d1 between the conveying device 28 and an inner surface of a first part of the elongated cylindrical tube 21 being a top part 30 of said tube 21. The person skilled in the art will appreciate that the first distance d1 is defined as the distance between a top part 33 of a tube that is defined to circumscribe the conveying device 28 and the inner surface of the top part 30 of the elongated cylindrical tube 21. From figure 2 it can be observed that the conveying device 28 is in contact with an inner surface of a second part of the elongated cylindrical tube 21 being a bottom part 31 of said tube 21.

Figure 3 shows a schematic cross-sectional view of an exemplary, non-limiting second embodiment of the eccentrically arranged elongated cylindrical tube 21 of the reactor 20 according to the invention, wherein the first distance d1 between the conveying device 28 and the top part 30 of the elongated cylindrical tube 21 is larger than a non-zero second distance d2 between the conveying device 28 and the inner surface of the bottom part 31 of the elongated cylindrical tube 21. The person skilled in the art will appreciate that the second distance d2 is defined as the distance between a bottom part 34 of the tube that is defined to circumscribe the conveying device 28 and the inner surface of the bottom part 31 of the elongated cylindrical tube 21.

The person skilled in the art will appreciate that due to the small distance (shown in figure 3) or due to the absence of any distance (shown in figure 2) between the conveying device 28 and the inner surface of the bottom part 31 of the elongated cylindrical tube 21, the conveying device 28 can prevent char residue from accumulating at the inner surface of the bottom part 31 of the elongated cylindrical tube 21 to such extent that the pyrolysis process becomes too inefficient and eventually might stop. In this way, blockage of the operation and the formation of a heat insulating layer that is detrimental to the pyrolysis process as mentioned above can be prevented. As a result, the present invention provides an energy efficient reactor 20. Gas that is produced during the pyrolysis of the polymeric waste material in the elongated cylindrical tube 21 can accumulate in a space 36 between the conveying device 28 and the inner surface of an upper part of the elongated cylindrical tube 21 of the reactor 20, said space 36 being provided due to the relatively large first distance d1 between the conveying device 28 and the inner surface of the top part 30 of the tube 21, until it is discharged through the gas venting port 27.

Generally, the gas venting port 27 may be provided in the upper part, e.g. the top part 30, of the elongated cylindrical tube 21 to provide an opening for the gas collected in the space 36 in the tube 21 between the conveying device 28 and the inner surface of the upper part of the elongated cylindrical tube 21. The location at which the gas venting port 27 is provided and the number of gas venting ports may be suitably selected in accordance with a specific situation. The number of gas venting ports may for example be 1 to 10, e.g. 1, 2, 3, 4 or 5. For example, two or more gas venting ports may be provided at the top part of the elongated cylindrical tube, wherein the gas venting ports are distributed along the longitudinal axis of the tube.

The person skilled in the art will appreciate that the terms such as 'top', 'bottom', 'upper', 'lower' are used as seen during the operation of the horizontal reactor 20, i.e. when the longitudinal axis 22 of the elongated cylindrical tube 21 is parallel to the ground. Accordingly, the term 'top part 30 of the elongated cylindrical tube 21' means the part of said tube 21 which comes to the top when the horizontal reactor 20 is in operation. Similarly, the term 'bottom part 31 of the elongated cylindrical tube 21' means the part of said tube 21 which comes to the bottom when the horizontal reactor 20 is in operation.

In an exemplary embodiment of the reactor 20 of the invention, the elongated cylindrical tube 21 can have an inner diameter 37 of 10 cm to 50 cm and a length 92 (indicated in figure 1) of 5 m to 35 m. Preferably the elongated cylindrical tube 21 has an inner diameter 37 of 20 cm to 40 cm and a length 92 (indicated in figure 1) of 10 m to 25 m. More preferably, the elongated cylindrical tube 21 has an inner diameter 37 of 25 cm to 35 cm and a length 92 (indicated in figure 1) of 15 m to 20 m.

Figures 2 and 3 furthermore show that the conveying device 28 has a diameter 38 that is smaller than the inner diameter 37 of the elongated cylindrical tube 21. Typically, the conveying device 28 has a diameter 38 that is 70% to 99% of the inner diameter 37 of the elongated cylindrical tube 21. The length of the conveying device (not shown) is selected to efficiently transport the polymeric waste material from the inlet port 24 of the elongated cylindrical tube 21 to the outlet port 26 of the elongated cylindrical tube 21 and may typically be 90% to 100% of the elongated cylindrical tube 21. As mentioned above, the elongated cylindrical tube 21 can have a length 92 (indicated in figure 1) of 5 m to 35 m, preferably 10 m to 25 m, more preferably 15 m to 20 m. Such dimensions of the elongated cylindrical tube 21 reduce the risk of the polymeric waste material being blocked in said tube 21.

Preferably, the first distance d1 between the conveying device 28 and the inner surface of the top part 30 of the elongated cylindrical tube 21 is 5.0 cm to 10.0 cm. Preferably, the second distance d2 between the conveying device 28 and the inner surface of the bottom part 31 of said tube 21 is at most 5.0 cm. This allows the char residue to be efficiently removed, i.e. in such a way to ensure that the pyrolysis process does not become too inefficient and eventually might stop, from the inner surface of the bottom part 31 of the elongated cylindrical tube 21 while avoiding any damage to at least one of the inner surface of the bottom part 31 of said tube 21 and the conveying device 28.

As shown in figure 2, the conveying device 28 and the inner surface of the bottom part 31 of the elongated cylindrical tube 21 can be in contact with each other, i.e. the second distance d2 is equal to zero. The person skilled in the art will appreciate that in this way it can be ensured that the char residue is scraped from the inner surface of the bottom part 31 of said tube 21. In this way, heat transfer from the elongated cylindrical tube 21 to the polymeric waste material is hampered as little as possible and ideally remains unaffected. As a result, the pyrolysis process can be prevented from becoming less efficient and from stopping eventually.

As shown in figure 3, the second distance d2 between the conveying device 28 and the inner surface of the bottom part 31 of said tube 21 can be 0.1 cm to 5.0 cm. The person skilled in the art will appreciate that in this way a space 39 between the conveying device 28 and the inner surface of the bottom part 31 of the elongated cylindrical tube 21 of the reactor 20 is provided that can prevent accumulation of any char residue between the conveying device 28 and the inner surface of the bottom part 31 of the elongated cylindrical tube 21 to such an extent that the pyrolysis process becomes too inefficient and eventually stops. In addition, any damage to at least one of the inner surface of the bottom part 31 of said tube 21 and the conveying device 28 can be reduced and ideally can be prevented.

In accordance with figures 2 and 3 it is noted that preferably the conveying device 28 is a screw. The screw can be of any suitable type, such as for example a paddle screw, a ribbon screw or an extrusion screw. In figures 2 and 3 the blades of the screw are schematically shown. The person skilled in the art will appreciate that any suitable shape of the blades can be applied.

Figure 4 schematically shows a side view of exemplary, non-limiting embodiments of conveying devices of the feeding portion 10, the reactor 20, and the char collection portion 50 in accordance with the exemplary, non-limiting embodiment of the system 100 shown in figure 1. For the sake of simplicity figure 4 only shows the second conveying device 12 that is arranged inside the second elongated cylindrical tube 11 of the feeding portion 10 (both shown in figure 1), the conveying device 28 that is arranged inside the elongated cylindrical tube 21 of the reactor 20 (both shown in figure 1), and the third conveying device 52 that is arranged inside the third elongated cylindrical tube 51 of the char collection portion 50 (both shown in figure 1).

In accordance with figure 4, the second conveying device 12, the conveying device 28 and the third conveying device 52 are screws. The person skilled in the art will appreciate that any suitable type of screws can be used. The screw that constitutes the second conveying device 12 of the feeding portion has a constant lead L1 along its longitudinal axis. The person skilled in the art will appreciate that any suitable configuration of the lead L1 of this screw can be envisaged depending on the specific requirements.

The screw that constitutes the conveying device 28 of the reactor has a first portion 90 with a constant lead L2 that is smaller than the lead L1 of the screw constituting the second conveying device 12. Said first portion 90 of the screw constituting the conveying device 28 is arranged closer to the first end portion 23 of the elongated cylindrical tube 21 (figure 1) when said screw is arranged inside the elongated cylindrical tube. Furthermore, the screw that constitutes the conveying device 28 of the reactor has a second portion 91 having a constant lead L3 that is smaller than the lead L2 of the first portion 90 of said screw. The second portion 91 of the screw that constitutes the conveying device 28 is arranged closer to the second end portion 25 of the elongated cylindrical tube 21 (figure 1) when said screw is arranged inside the elongated cylindrical tube. The person skilled in the art will appreciate that the screw that constitutes the conveying device 28 has an intermediate portion that is arranged between the first portion 90 and the second portion 91, wherein the intermediate portion has a lead that gradually changes from the lead L2 to the lead L3. In this way, congestion of the screw can be prevented.

Finally, figure 4 schematically shows that the screw that constitutes the third conveying device 52 of the char collection portion 50 has a lead L4 that is constant and is smaller than the lead L3 of the second portion 91 of the screw that constitutes the conveying device 28 of the reactor. Hence, in this example the leads of the screws are chosen such that L1 > L2 > L3 > L4. The person skilled in the art will appreciate that the leads of the different screws can be chosen in any suitable way depending on the specific requirements as long as the pyrolyzing process is not hampered by it.

The present invention can be summarized as relating to a horizontal pyrolysis reactor 20 comprising an elongated cylindrical tube 21 having a longitudinal axis 22, said tube having a first end portion 23 provided with an inlet port 24 and a second end portion 25 provided with an outlet port 26. Said tube being configured to, in operation, pyrolyze a polymeric waste material that is fed into said tube via the inlet port into gas and char residue. Said gas can be discharged from the tube via a gas venting port 27. A conveying device 28 is arranged inside said tube to convey the polymeric waste material and the char residue through said tube from the inlet port to the outlet port. The conveying device has a longitudinal axis 29 that preferably extends parallel to and below the longitudinal axis of said tube. The invention further relates to a system 100 comprising the reactor of the invention and a process for pyrolyzing a polymeric waste material using said reactor.

It is noted that the invention relates to all possible combinations of features described herein and that the scope of the present invention therefore is not limited to the examples discussed in the foregoing but that several amendments and modifications thereof are possible without deviating from the scope of the present invention as defined by the attached claims. In particular, combinations of specific features of various aspects of the invention may be made. An aspect of the invention may be further advantageously enhanced by adding a feature that was described in relation to another aspect of the invention. While the present invention has been illustrated and described in detail in the figures and the description, such illustration and description are to be considered illustrative or exemplary only, and not restrictive.

The present invention is not limited to the disclosed embodiments. Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference numerals in the claims should not be construed as limiting the scope of the present invention.

### REFERENCE NUMERALS

- 10: feeding portion
- 11: second elongated cylindrical tube
- 12: second conveying device
- 20: reactor
- 21: elongated cylindrical tube
- 22: longitudinal axis of the elongated cylindrical tube
- 23: first end portion of the elongated cylindrical tube
- 24: inlet port of the elongated cylindrical tube
- 25: second end portion of the elongated cylindrical tube
- 26: outlet port of the elongated cylindrical tube
- 27: gas venting port
- 28: conveying device
- 29: longitudinal axis of the conveying device
- 30: top part of the elongated cylindrical tube
- 31: bottom part of the elongated cylindrical tube
- 32: outer elongated cylindrical tube
- 33: top part of a tube defined by the conveying device being a screw
- 34: bottom part of a tube defined by the conveying device being a screw
- 35: space between the elongated cylindrical tube and the outer elongated cylindrical tube
- 36: space between the conveying device and the inner surface of an upper part of the elongated cylindrical tube
- 37: inner diameter of the elongated cylindrical tube
- 38: diameter of the conveying device
- 39: space between the conveying device and the inner surface of the bottom part of the elongated cylindrical tube
- 40: gas collection portion
- 41: gas cooling and/or fractionation unit
- 50: char collection portion
- 51: third elongated cylindrical tube
- 52: third conveying device
- 60: storage unit
- 70: filling mechanism for filling the feeding portion
- 80: supply unit
- 90: first portion of the screw constituting the conveying device of the reactor
- 91: second portion of the screw constituting the conveying device of the reactor
- 92: length of the elongated cylindrical tube of the reactor

## Claims

1. A horizontal pyrolysis reactor (20) comprising:
- an elongated cylindrical tube (21) having a longitudinal axis (22), wherein the tube (21) has a first end portion (23) having an inlet port (24) and a second end portion (25) having an outlet port (26) and the tube (21) is configured to, in operation, pyrolyze a polymeric waste material into gas and char residue;
- at least one gas venting port (27) that is provided to the elongated cylindrical tube (21) and configured to, in operation, discharge the gas from the elongated cylindrical tube (21); and
- a conveying device (28) arranged in the tube (21) and configured to, in operation, convey the polymeric waste material and the char residue through the elongated cylindrical tube (21) from the inlet port (24) to the outlet port (26), wherein the conveying device (28) has a longitudinal axis (29) that is arranged below the longitudinal axis (22) of the elongated cylindrical tube (21).

2. The reactor (20) according to claim 1, wherein the conveying device (28) has a diameter which is 70% to 99% of an inner diameter of the elongated cylindrical tube (21), preferably wherein a first distance (d1) between the conveying device (28) and an inner surface of a first part of the elongated cylindrical tube (21) being a top part (30) of said tube (21) is 5.0 cm to 10.0 cm.

3. The reactor (20) according to any one of the preceding claims, wherein a second distance (d2) between the conveying device (28) and an inner surface of a second part of the elongated cylindrical tube (21) being a bottom part (31) of said tube (21) is at most 5.0 cm.

4. The reactor (20) according to claim 3, wherein the second distance (d2) between the conveying device (28) and the inner surface of the bottom part (31) of the elongated cylindrical tube (21) is 0.1 cm to 5.0 cm.

5. The reactor (20) according to claim 1 or 2, wherein the conveying device (28) and an inner surface of a second part of the elongated cylindrical tube (21) being a bottom part (31) of said tube (21) are in contact with each other.

6. The reactor (20) according to any one of the preceding claims, wherein the elongated cylindrical tube (21) has an inner diameter (37) of 10 cm to 50 cm and a length (92) of 5 m to 35 m, preferably an inner diameter (37) of 20 cm to 40 cm and a length (92) of 10 m to 25 m, more preferably an inner diameter (37) of 25 cm to 35 cm and a length (92) of 15 m to 20 m.

7. The reactor (20) according to any one of the preceding claims, wherein the conveying device (28) is a screw, preferably a paddle screw, a ribbon screw or an extrusion screw.

8. The reactor (20) according to any one of the preceding claims, wherein the reactor further comprises an outer elongated cylindrical tube (32) concentrically arranged with and enclosing the elongated cylindrical tube (21) to provide a double walled tube, wherein the elongated cylindrical tube (21) is configured to be heated using a heated gas in a space (35) confined by the elongated cylindrical tube (21) and the outer elongated cylindrical tube (32).

9. A system (100) comprising:
- the reactor (20) according to any one of the preceding claims;
- a feeding portion (10) fluidly connected to the inlet port (24) of the elongated cylindrical tube (21) of the reactor (20) for feeding the polymeric waste material into the reactor (20);
- a gas collection portion (40) fluidly connected to the at least one gas venting port (27) of the elongated cylindrical tube (21) of the reactor (20) for collecting the gas from the reactor (20); and
- a char collection portion (50) fluidly connected to the outlet port (26) of the elongated cylindrical tube (21) of the reactor (20) for collecting the char residue from the reactor (20).

10. The system (100) according to claim 9, wherein the feeding portion (10) comprises:
- a second elongated cylindrical tube (11) that is configured to receive polymeric waste material and, in operation, at least partially melt polymeric waste material; and
- a second conveying device (12) that is arranged inside the second elongated cylindrical tube (11) and is adapted to convey the at least partially molten polymeric waste material through the second elongated cylindrical tube (11) and into the inlet port (24) of the elongated cylindrical tube (21) of the reactor (20).

11. The system (100) according to any one of claims 9-10, wherein the gas collection portion (40) comprises a gas cooling and/or fractionation unit (41) configured to, in operation, obtain a hydro carbonaceous liquid.

12. The system (100) according to any one of claims 9-11, wherein the char collection portion (50) comprises:
- a third elongated cylindrical tube (51) that is configured to, in operation, receive char residue via the outlet port (26) of the elongated cylindrical tube (21) of the reactor (20); and
- a third conveying device (52) that is arranged inside the third elongated cylindrical tube (51) and is adapted to transport the char residue through the third elongated cylindrical tube (51) optionally while pyrolyzing the char residue.

13. A process for pyrolyzing a polymeric waste material wherein the process comprises the steps of:
- feeding the polymeric waste material into the inlet port (24) of the elongated cylindrical tube (21) of the reactor (20) according to any one of claims 1-8;
- conveying the polymeric waste material through the elongated cylindrical tube (21) of the reactor (20), wherein the elongated cylindrical tube (21) of the reactor (20) is heated to pyrolyze the polymeric waste material into gas and char residue;
- collecting the gas via the at least one gas venting port (27) of the elongated cylindrical tube (21) of the reactor (20); and
- collecting the char residue from the outlet port (26) of the elongated cylindrical tube (21) of the reactor (20).

14. The process according to claim 13, wherein the process is a continuous process.

15. The process according to claims 13 or 14, wherein the polymeric waste material fed to the reactor (20) is at least partially molten and/or has a temperature of 350°C to 450°C, and/or the reactor (20) is heated such that the inner surface of the elongated cylindrical tube (21) has a temperature of 700°C to 1100°C, preferably 800°C to 1000°C, more preferably 850°C to 950°C.
